Europäisches Patentamt

European Patent Office

Office européen des brevets

(19)

(11) **EP 0 502 535 B1**

(12) **EUROPEAN PATENT SPECIFICATION**

(45) Date of publication and mention
of the grant of the patent:
**02.10.1996 Bulletin 1996/40**

(51) Int Cl.⁶: **G11B 5/147**, G11B 5/31,
H01F 10/12, H01F 10/14

(21) Application number: **92103794.1**

(22) Date of filing: **05.03.1992**

(54) **Magnetic head**

Magnetknopf

Tête magnétique

(84) Designated Contracting States:
**DE FR GB NL**

(30) Priority: **06.03.1991 JP 39906/91**
**14.06.1991 JP 142923/91**
**13.08.1991 JP 202859/91**

(43) Date of publication of application:
**09.09.1992 Bulletin 1992/37**

(73) Proprietor: **MATSUSHITA ELECTRIC INDUSTRIAL CO., LTD.**
**Kadoma-shi, Osaka-fu, 571 (JP)**

(72) Inventors:
• **Nago, Kumio**
**Ikoma-gun, Nara-ken (JP)**
• **Sakakima, Hiroshi**
**Tsuzuki-gun, Kyoto-fu (JP)**
• **Ihara, Keita**
**Katano-shi (JP)**
• **Hasegawa, Hiroyuki**
**Katano-shi (JP)**
• **Takahashi, Ken**
**Asahi-ku, Osaka-shi (JP)**
• **Sawai, Eisuke**
**Hirakata-shi (JP)**

(74) Representative: **Patentanwälte**
**Leinweber & Zimmermann**
**Rosental 7**
**80331 München (DE)**

(56) References cited:
**EP-A- 0 300 511**          **EP-A- 0 373 615**

• **DATABASE WPIL, no. 92-062 280, DERWENT PUBLICATIONS LTD, London**
• **DATABASE WPIL, no. 92-061 318, DERWENT PUBLICATIONS LTD, London**

**Description**

BACKGROUND OF THE INVENTION

Field of the Invention

This invention relates to a magnetic head for use in a magnetic recording/reproducing device such as a magnetic picture-recording/reproducing device (video tape recorder), a magnetic sound recording/reproducing device and a magnetic recording device for a computer.

Prior Art

Recently, in order to meet a demand for a high-density recording in the magnetic recording field, the development of high-performance magnetic heads suited for a high coercivity media has now been made. In order to achieve a high-density recording, it has now become necessary to produce a magnetic head with a high saturation flux density and a high permeability by making a track width and a gap length of the magnetic head as narrow as possible.

To meet such a demand, when the track width is formed by cutting a bulk member or a ribbon of a thin strip, the narrower the track width is, the more difficult the formation of the magnetic head is. Therefore, there has been provided the type of magnetic head with a narrow track width, which is produced by forming soft magnetic films on a substrate by a sputtering process or a vapor deposition process. One example of such magnetic heads so far developed is a ring-type laminated head in which a core material, which is formed by alternately laminating Sendust alloy insulator films, or Co-based amorphous alloy films, and insulator films in the track width direction, is held between non-magnetic substrates, and a magnetic circuit is constituted by this core material. Another example is a magnetic head (called "MIG head") in which the major part of a magnetic circuit is formed with ferrite, and soft magnetic films are provided only at those portions which are disposed near a magnetic gap and are liable to be magnetically saturated. As compared with the MIG head, advantageously, the above laminated-type head is not influenced by a false output, and produces low sliding noises at a high frequency, and a high reproducing efficiency can be obtained at a high-frequency band.

The characteristics of a magnetic head are closely related to the properties of materials of a core material used therein. In order to achieve a high-density recording, the core material of the magnetic head is required to have a high saturation flux density (which mainly influences the recording characteristics) and a high permeability (which mainly influences the reproducing characteristics).

To meet such requirements, the core material of the above laminated-type head needs to have an isotropic high permeability, and at present, Sendust alloy (Fe-Al-Si system alloy) film and Co-based amorphous alloy film have now been in practical use.

However, the saturation flux density of the Sendust alloy film and the Co-based amorphous alloy film is as low as approximately 1 T, and the saturation flux density of these conventional materials is too limitative to achieve the high-density recording.

Under the above circumstances, the development and research of soft magnetic films having a high saturation flux density and a high permeability have been extensively made. One example of that is a Fe-N film. However, it is known that the Fe-N film is abruptly deteriorated in soft magnetic properties by a heat treatment at temperatures of above 350°C, and has a problem with respect to a thermal stability of the soft magnetic properties. Therefore, in an attempt to improve the thermal stability of the Fe-N film, the study of a Fe-M-N film (M is at least one element selected from the group consisting of Zr, Hf, Ti, Nb, Ta, V, Mo and W) has been made (see JP-A-2-275605).

The Fe-Zr-N system soft magnetic film, described in detail in the above JP-A-2-275605, is a thin film in which an in-plane uniaxial anisotropy is induced by a heat treatment in a magnetic field. This film is suitable as a soft magnetic film for the above MIG head or the like, as disclosed, for example, in JP-A-1-300412, but is not suitable for the above ring-type laminated head which is required to have an isotropic high permeability.

JP-A-3-148806 discloses the following soft magnetic film having a high saturation flux density and a high thermal stability:

"A high thermal-resistant magnetic thin film composed of a Co-B-M or a Fe-B-M system alloy thin film where M is at least one element selected from the group consisting of Ti, V, Zr, Hf, Nb, Ta, Cr, Mo and W, at least a part of the film being crystallized."

However, the soft magnetic thin film described in the above JP-A-3-148806 is produced by an ion beam sputtering process in which a target and a substrate are not disposed parallel to each other, and therefore atoms, ejected from the target to be incident obliquely on the substrate, deposit on the substrate, so that an anisotropy develops in the permeability characteristics of the produced film because of a self-shadowing effect. In addition, with respect to this magnetic thin film, an in-plane uniaxial anisotropy is induced by a heat treatment in a magnetic field, and as described above, this film is suitable as a soft magnetic film for the MIG head, but is not suitable for the ring-type laminated head.

On the other hand, as an improved material of a Co-based amorphous alloy which is improved in thermal stability of soft magnetic properties and saturation flux density, there has been developed Co-Nb-Zr/Co-Nb-Zr-N compositionally-modulated nitride film, and a laminated-type head using this improved material has been produced (Journal of The Magnetics Society of Japan, Vol. 14, No. 2).

However, even in this Co-Nb-Zr/Co-Nb-Zr-N compositionally-modulated nitride film, the saturation flux density is approximately 1.3 T at highest, and in order to obtain sufficient recording characteristics for a higher coercivity media, there has now been a demand for a core material having a higher saturation flux density. Furthermore, this Co-Nb-Zr/ Co-Nb-Zr-N compositionally-modulated nitride film can not obtain a high permeability by a heat treatment in a non-magnetic field as is the case with Sendust and a Co-based amorphous alloy, and when this nitride film is used as a core material for the above laminated-type head, a heat treatment in a rotating magnetic field is needed because the core material is required to have isotropic high permeability properties, and this poses a problem that a heat treatment apparatus of a complicated construction is needed.

When a soft magnetic film is to be formed on a substrate by sputtering or vapor deposition, an internal stress develops in the soft magnetic film because of the difference in thermal expansion coefficient between the soft magnetic film and the substrate, so that a strain develops therein due to a reverse magnetostriction effect. When this is used in a magnetic head, there is encountered a problem that output characteristics of the magnetic head is degraded. In addition, the internal stress of the soft magnetic film which is produced for the above reason makes difficult the bonding between the substrates, a glass molding, a gap formation, and so on in subsequent steps of the magnetic head production process.

EP 0 373 615 A2, particularly claims 3 and 6, discloses a soft magnetic alloy film for use in a magnetic head consisting of Fe-Ta-B-N system soft magnetic films, said soft magnetic films containing Fe as a main component, 1 to 10 % Ta, 2 to 13 % B and 5 to 20 % N, wherein at least the N-content is modulated in the direction of the film thickness. The films are heat-treated at a high temperature within a magnetic field. The thus heat-treated films show numerous fine crystal grains of grain sizes up to 20 nm.

EP 0 300 511 A2 discloses a magnetic head having at least one magnetic gap in its magnetic path and comprising an Fe-based soft magnetic alloy layer in the magnetic path, at least 50 % of the structure of the alloy layer consisting of fine crystalline particles having a body centered cubic structure and having an average particle size of up to 50 nm. Said soft magnetic alloy layer is alternately laminated with insulated layers to form the core material of the magnetic head. Compositions given for the layers either do not contain nitrogen or contain not less than 0.1 % of Cu or Ag.

It is an object of this invention to provide a magnetic head which exhibits excellent recording characteristics for a high coercivity media, and has low sliding noises at high frequencies, and has a high reproducing efficiency at a high-frequency band, thereby enabling a high-density recording.

According to a first aspect of the invention, the above object is achieved by a magnetic head having at least one magnetic gap in the magnetic path thereof which consists of a substrate, a core material and the magnetic gap, the core material comprising laminated magnetic alloy films which are formed on the substrate, wherein: the core material constituting a magnetic circuit comprises Fe-Ta-N system soft magnetic films and insulator films both kinds of which are alternately laminated, the soft magnetic films being formed on the substrate by a sputtering method of the type in which a target and the substrate are arranged in parallel opposite relationship to each other; the soft magnetic films consist of Fe-Ta-N system alloy material which contains Fe as a main component, 5 to 17 atomic % nitrogen, and 7 to 15 atomic % Ta; the alloy material has a specific fine structure in which a fine crystal of $\alpha$-Fe and fine particles of tantalum nitride are mixed together, the fine crystal of $\alpha$-Fe being one in which at least one element or a compound selected from the group consisting of Ta, nitrogen, and tantalum nitride is solutionized and thereby the crystal lattice $\alpha$-Fe being expanded, the average grain size of the fine crystal of $\alpha$-Fe being not more than 10 nm, and the average particle size of the fine particles of tantalum nitride being not more than 5 nm; the respective soft magnetic film has a thickness of 1 to 10$\mu$m; the substrate has a thermal coefficient of linear expansion of from 110 X $10^{-7}$/°C to 135 X $10^{-7}$/ °C at a temperature range from room temperature to 550 °C; and a heat during a magnetic head production process is carried out without a magnetic field.

According to a second aspect, the above object is achieved by a magnetic head having at least one magnetic gap in the magnetic path thereof which consists of a substrate, a core material and the magnetic gap, the core material comprising laminated magnetic alloy films which are formed on the substrate, wherein: the core material constituting a magnetic circuit comprises Fe-Ta-B-N system soft magnetic films and insulator films both kinds of which are alternately laminated, the soft magnetic films being formed on the substrate by a sputtering method of the type in which a target and the substrate are arranged in parallel opposite relationship to each other; the soft magnetic films consist of Fe-Ta-B-N system alloy material which contains Fe as a main component, 6 to 15 atomic % nitrogen, 7 to 15 atomic % Ta and 0.5 to 13 atomic % boron; the alloy material has a specific fine structure in which a fine crystal of $\alpha$-Fe and fine particles of tantalum nitride or tantalum boride are mixed together, the fine crystal of $\alpha$-Fe being one in which at least one element or a compound selected from the group consisting of Ta, nitrogen, boron, tantalum nitride and tantalum boride is solutionized and thereby the crystal lattice $\alpha$-Fe being expanded, the average grain size of the fine crystal of

$\alpha$-Fe being not more than 10 nm, and the average particle size of the fine particles of tantalum nitride being not more than 5 nm; the respective soft magnetic film has a thickness of 1 to 10 $\mu$m; the substrate has a thermal coefficient of linear expansion of from 110 X 10$^{-7}$/°C to 135 X 10$^{-7}$/°C at a temperature range from room temperature to 550 °C; and a heat treatment during a magnetic head production process is carried out without a magnetic field.

Preferably, the substrate consists of first and second substrate layers and the core material is interposed therebetween.

The substrate may be a magnetic or a non-magnetic material.

A core material, formed by analternately laminating soft magnetic films (1 to 10 $\mu$m thick) and insulator films of $SiO_2$, $Al_2O_3$ or the like (0.05 to 0.5 $\mu$m thick) constitutes a magnetic circuit. The soft magnetic film is either a Fe-Ta-N system soft magnetic film containing Fe as a main component, 5 to 17 atomic % N and 7 to 15 atomic % Ta, or a Fe-Ta-B-N system soft magnetic film containing Fe as a main component, 6 to 15 atomic % N, 7 to 15 atomic % Ta and 0.5 to 13 atomic % B (boron). The soft magnetic film is produced by a sputtering method in which a target and a substrate are disposed in parallel opposed relationship to each other. A heat treatment during a magnetic head production process is carried out in a non-magnetic field. The substrate on which the soft magnetic films are formed is either magnetic or non-magnetic, and has a thermal expansion coefficient of from 110 x 10$^{-7}$/°C to 135 x 10$^{-7}$/°C. (The aforesaid coefficient as well as all thermal expansion coefficients mentioned hereinafter are linear thermal expansion coefficients.) When it is desired to reduce sliding noises, the non-magnetic substrate is used. When it is desired to increase a head output, the magnetic substrate (ferrite) is used.

The Fe-Ta-N system or Fe-Ta-B-N system soft magnetic film. is composed of a material having a fine structure in which a fine crystal of $\alpha$-Fe as well as fine particles of tantalum nitride or fine particles of tantalum boride are mixed together, the fine crystal of $\alpha$-Fe being one in which at least one element or a compound selected from the group consisting of Ta, N (nitrogen), B (boron), tantalum nitride and tantalum boride is solutionized and thereby the crystal lattice of $\alpha$-Fe being expanded. The average particle size of the fine crystal of $\alpha$-Fe is not more than 10 nm, and the average particle size of the fine particles of tantalum nitride or the fine particles of tantalum boride is not more than 5 nm.

The magnetic head of the present invention employs the soft magnetic films which exhibit a high saturation flux density and an isotropic high permeability of a low magnetostriction in the heat treatment in the non-magnetic field, and therefore the magnetic head achieves excellent recording characteristics with respect to a high coercivity media, and produces low sliding noises at high frequency, and achieves a high reproducing efficiency at a high-frequency band.

Particularly when the Fe-Ta-N system or Fe-Ta-B-N system soft magnetic films have the above-mentioned structure, excellent magnetic head characteristics can be achieved.

Since the soft magnetic films are formed on the substrate having a thermal expansion coefficient of from 110 x 10$^{-7}$/°C to 135 x 10$^{-7}$/°C, the internal stress of the soft magnetic film is small, and the deterioration of magnetic properties due to a reverse magneto-striction effect during the magnetic head production process is less, and this facilitates the bonding between the substrates, the glass molding, the formation of a gap, and so on.

Further, since the magnetic head can be produced by the heat treatment in the non-magnetic field which is available simply and easily, a heat treatment furnace of a complicated construction for effecting a heat treatment in a magnetic field is not needed, and the mass production of the magnetic head can be achieved.

Further, as compared with the Fe-Ta-N system soft magnetic film, the Fe-Ta-B-N system soft magnetic film can achieve good soft magnetic properties (high saturation flux density and small magnetostriction) at higher heat treatment temperatures. The magnetic head, in which the magnetic circuit is constituted by the core material formed by alternately laminating the Fe-Ta-B-N system soft magnetic films and the insulator films, enables the glass bonding at higher heat treatment temperatures than the magnetic head using the Fe-Ta-N system soft magnetic films in the core material. Therefore, glass which is required to undergo a high-temperature heat treatment and provides a sufficient strength and an excellent wear resistance can be used, which enhances the reliability of the magnetic head.

BRIEF DESCRIPTION OF THE DRAWINGS

Fig. 1 is a graph showing an in-plane magnetic anisotropy field Hk of a soft magnetic film prepared according to the present invention;

Fig. 2 is a graph showing the relationship between a film thickness and a coercivity Hc of the soft magnetic films prepared according to the present invention;

Fig. 3 is a graph showing the relationship between a film thickness of the soft magnetic films and a real part of a complex permeability $\mu'$ thereof at various frequencies;

Fig. 4 is an X-ray diffraction diagram of a Fe-Ta-N soft magnetic film ;

Fig. 5 is a graph showing the relationship between an internal stress a of a soft magnetic film and a thermal expansion coefficient of a substrate;

Fig. 6 is a graph showing the relationship between a coercivity Hc of soft magnetic films and a heat treatment temperature;

Fig. 7 is a graph showing the relationship between a saturation flux density Bs of the soft magnetic films and the heat treatment temperature;

Fig. 8 is a graph showing the relationship between a saturation magnetostriction λs of the soft magnetic films and the heat treatment temperature;

Fig. 9 is an X-ray diffraction diagram of Fe-Ta-N soft magnetic films relative to the heat treatment temperature;

Fig. 10 is an X-ray diffraction diagram of Fe-Ta-B-N soft magnetic films relative to the heat treatment temperature;

Fig. 11 is a graph showing a phase change of soft magnetic films relative to the boron content of the film and the heat treatment temperature;

Fig. 12 is a schematic view of a laminated-type head prepared according to the present invention;

Fig. 13 is a graph showing the relationship between an output of a laminated-type head and a frequency at a relative speed of 7 m/sec;

Fig. 14 is a graph showing the relationship between an output of a laminated-type head and a frequency at a relative speed of 21 m/sec;

Fig. 15A is a schematic view of an RF diode sputtering apparatus;

Fig. 15B is a schematic view of facing target sputtering apparatus; and

Fig. 15C is a schematic view of an ion beam sputtering apparatus.

## DESCRIPTION OF THE PREFERRED EMBODIMENTS

### Example 1

Using an RF diode sputtering method (in which a target and a substrate are adapted to be disposed in parallel opposed relationship to each other), nitrogen gas was introduced into argon (Ar) gas in which an Fe-Ta alloy (87 atomic % Fe; 13 atomic % Ta) target was placed, so that a Fe-Ta-N system soft magnetic film was formed on a water-cooled non-magnetic Ti-Mg-Ni-O (oxygen) ceramics substrate having a thermal expansion coefficient of $115 \times 10^{-7}/°C$. In this manner, a plurality of Fe-Ta-N system soft magnetic films whose thickness was in the range of 0.2 to 15 µm were formed. Then, the thus-formed soft magnetic film was subjected to a heat treatment for one hour at a temperature of 550°C in vacuum in a non-magnetic field. The coercivity Hc of these films, as well as the real part of their complex permeability µ' at various frequencies, was measured. As a result, the coercivity Hc and permeability µ' of all of these films were isotropic in the plane of the film. An RBS (Rutherford back scattering) analysis of the composition of the thus formed Fe-Ta-N films indicated that the film was composed of 76.5 atomic % Fe, 10.5 atomic % Ta and 13 atomic % N (nitrogen) (which will be hereinafter referred to as $Fe_{76.5}Ta_{10.5}N_{13}$). The saturation flux density of these films was about 1.6 T, and the saturation magneto-striction thereof was not more than $1 \times 10^{-6}$ in terms of an absolute value.

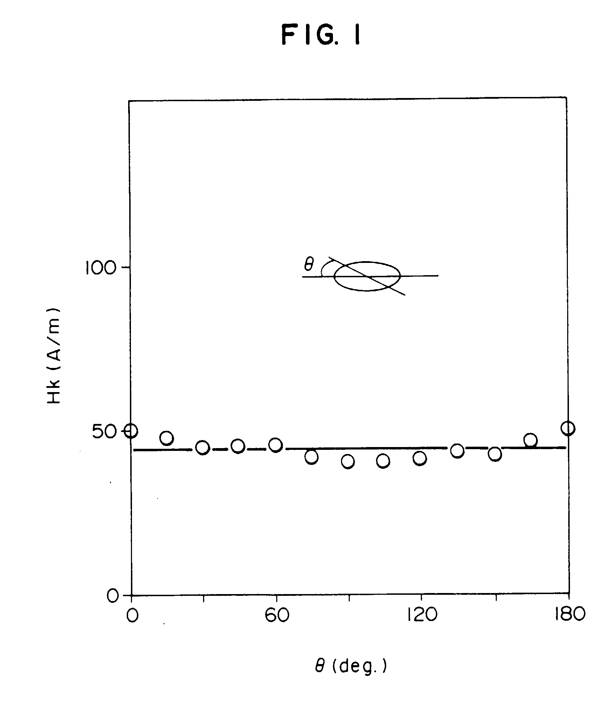

As one example, the result of measurement of the in-plane magnetic anisotropy field Hk of the film having a thickness of 2 µm is shown in Fig. 1. From Fig. 1, it will be appreciated that Hk shows a small value of 40 to 50 A/m, which indicates that it is isotropic in the plane of the film.

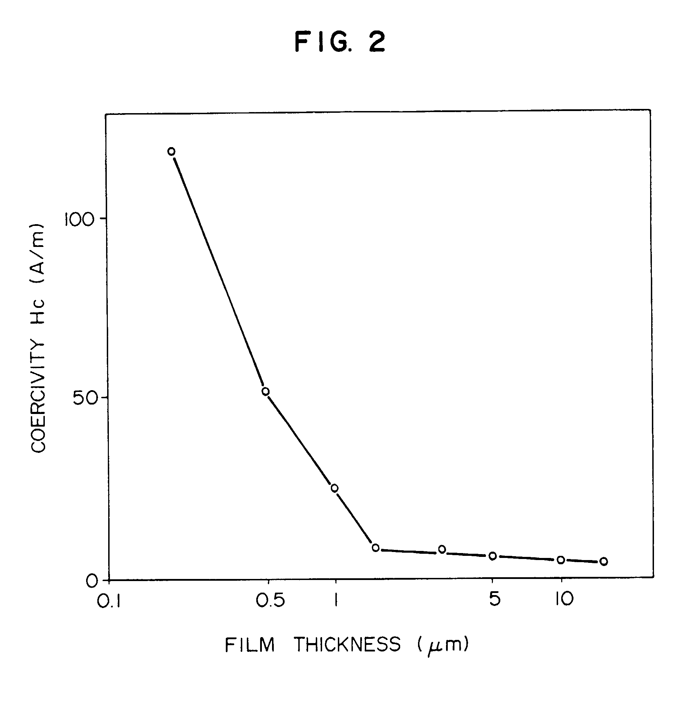

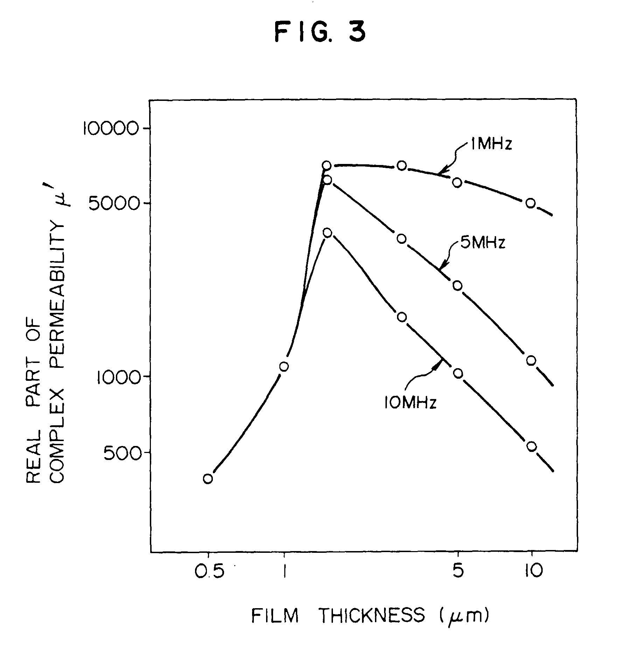

Fig. 2 shows the relation between the coercivity Hc and the film thickness. From Fig. 2, it will be appreciated that the films having a thickness of not less than 1.5 µm exhibit a low coercivity of not more than 8 A/m, and hence have excellent soft magnetic properties. The coercivity Hc abruptly increases in the film thickness range lower than about 1.5 µm. Fig. 3 shows the relationship between the permeability µ' and the film thickness. The permeability µ' at 1 MHz indicates the maximum value in the film thickness range of 1.5 to 3 µm, and abruptly decreases in the film thickness range lower than about 1.5 µm, and tends to decrease gently in the film thickness range higher than about 1.5 µm. As the frequency increases, the degree of decrease of the permeability µ' tends to increase in the film thickness range not less than 1.5 µm. When the film thickness is less than 1 µm, the permeability µ' at a high frequency band of not less than 1 MHz represents a low value of not more than 1000. Also, when the film thickness is not less than 10 µm, the permeability µ' at a high frequency band of not less than 5 MHz represents a low value of not more than 1000. Therefore, the film having such a thickness is not suitable for a core material used in a video tape recorder or the like. Therefore, when the thickness of the soft magnetic film constituting each layer of the core material for a laminated-type head used for a video tape recorder or the like was in the range of 1 to 10 µm, an excellent head output was obtained.

In this Example, although the Fe-Ta-N system soft magnetic films each composed of 76.5 atomic % Fe, 10.5 atomic % Ta and 13 atomic % N (nitrogen) has been described, similar effects were achieved with Fe-Ta-N system soft magnetic films each composed of Fe (main component), 5 to 17 atomic % N and 7 to 15 atomic % Ta. When the nitrogen content was 5 atomic % or less, the tantalum content was 7 atomic % or less, and the Fe content was 88 atomic % or more, good soft magnetic properties were not obtained in any film thickness. Also, when the nitrogen content was 17 atomic % or more, the tantalum content was 15 atomic % or more, and the iron content was 68 atomic % or less, the saturation flux density was reduced to 1 T or less because of the reduction of the iron content of the film.

Example 2

Using an RF diode sputtering process, nitrogen gas was introduced into Ar gas in which a Fe-Ta target (87 atomic % Fe; 13 atomic % Ta) was placed, so that a soft magnetic film having a thickness of 2 $\mu$m was formed by reactive sputtering on a non-magnetic ceramics substrate (having a thermal expansion coefficient of 115 x $10^{-7}$/°C) in a nitrogen partial pressure/total pressure ratio ($P_{N2}/P_{total}$) range of 0 to 10%. Then, a heat treatment was carried out for one hour at a temperature of 500°C in vacuum in a non-magnetic field, thereby preparing magnetic head members. The coercivity Hc, the effective permeability $\mu_{eff}$ at 1 MHz, and the saturation flux density Bs of these magnetic head members were measured, and results thereof are shown in Table 1.

Table 1

| $P_{N2}/P_{total}$ (%) | Hc (A/m) | $\mu_{eff}$ at 1 MHz | Bs (T) |
|---|---|---|---|
| 0 | 1440 | 50 | 1.49 |
| 1.7 | 167 | 500 | 1.53 |
| 2.5 | 8 | 10000 | 1.60 |
| 10 | 5.5 | 100 | 1.21 |

From Table 1, it will be appreciated that when the film was formed in the nitrogen partial pressure/total pressure ratio of 2.5%, good soft magnetic properties (low coercivity and high permeability) and a high saturation flux density are achieved. The composition of this film was $Fe_{76.5}Ta_{10.5}N_{13}$ (atomic %).

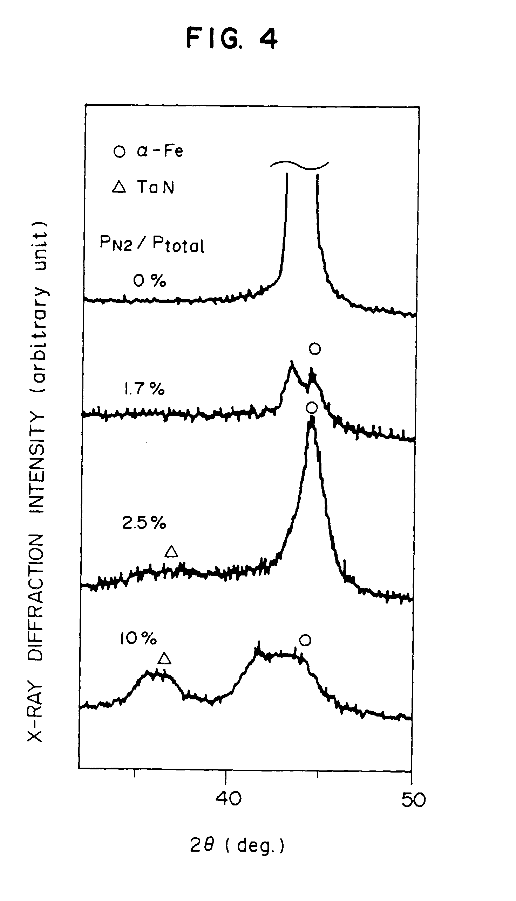

Fig. 4 shows an X-ray diffraction diagram of the above soft magnetic films formed in the nitrogen partial pressure/ total pressure ratio range of zero to 10%. In Fig. 4, signs $\bigcirc$ denote the diffraction peak of $\alpha$-Fe, and signs $\triangle$ denote the diffraction peak of TaN. In Fig. 4, the film formed in the nitrogen partial pressure/total pressure ratio of zero% is a crystalline phase resulting from the grain growth. With respect to the film formed in the nitrogen partial pressure/total pressure ratio of 1.7%, the diffraction peak other than that of the fine crystal of $\alpha$-Fe is also observed, and thus this film has an uneven crystalline grain structure. With respect to the film formed in the nitrogen partial pressure/total pressure ratio of 10%, the diffraction peak of TaN is observed, and the diffraction peak other than that of the fine crystal of $\alpha$-Fe is also observed, and thus this film has an uneven crystalline grain structure. As will be appreciated, the film, which was formed in the nitrogen partial pressure/total pressure ratio of 2.5% and exhibits good soft magnetic properties and a high saturation flux density, is a composite material composed of a fine structure in which a fine crystal of $\alpha$-Fe and fine particles of the tantalum nitride (TaN) are mixed together.

With respect to the soft magnetic film which was the composite material composed of the fine structure in which the fine crystal of $\alpha$-Fe and the fine particles of the tantalum nitride (TaN) were mixed together, particularly when the fine crystal of $\alpha$-Fe was one in which Ta, N (nitrogen), or the tantalum nitride is solutionized, and had an expanded lattice of Fe ((110) interplanar spacing at this time was 0.20355 nm, (110) interplanar spacing of $\alpha$-Fe was 0.20268 nm), this film exhibited good soft magnetic properties.

Next, the fine structure of the soft magnetic film ($Fe_{76.5}Ta_{10.5}N_{13}$) (which is a composite material composed of the fine structure in which a fine crystal of $\alpha$-Fe and fine particles of tantalum nitride are mixed together, and exhibits good soft magnetic properties (Hc is 8 A/m, and $\mu_{eff}$ at 1 MHz is 10000) and a high saturation flux density Bs of 1.6 T) was observed by a transmitting electron microscope (TEM). The heat treatment was effected for one hour at a temperature of 550°C in vacuum in a non-magnetic field.

As a result of inspecting the electron diffraction image by the TEM, the diffracted beams of $\alpha$-Fe and the diffracted beams of TaN were observed. It was found from dark field images taken from the (110) diffracted beams of $\alpha$-Fe and the (111) diffracted beams of TaN that the average particle size of the fine crystal of $\alpha$-Fe was about 5 nm, and that the average particle size of the TaN fine particles was about 2 nm. As a result of similar TEM observation, excellent soft magnetic properties were achieved when the average particle size of the fine crystal of $\alpha$-Fe was not more than 10 nm, and the average particle size of the fine particles of the tantalum nitride was not more than 5 nm. A ring-type laminated head, using Fe-Ta-N system soft magnetic films of this structure as a core material and required to have isotropic high permeability (in which the Fe-Ta-N system soft magnetic films (3 $\mu$m thick) and insulator films (0.2 $\mu$m thick) of $SiO_2$ were alternately laminated, a track width was 10 $\mu$m, a gap length was 0.23 $\mu$m, and a gap depth was 20 $\mu$m) exhibited self-recording/reproducing characteristics about 4 dB higher at 1 MHz than those of a Co-based amorphous laminate-type head and a Sendust laminate-type head.

Example 3

Non-magnetic substrates different in thermal expansion coefficient in the range of 100 x $10^{-7}$/°C to 165 x $10^{-7}$/°C

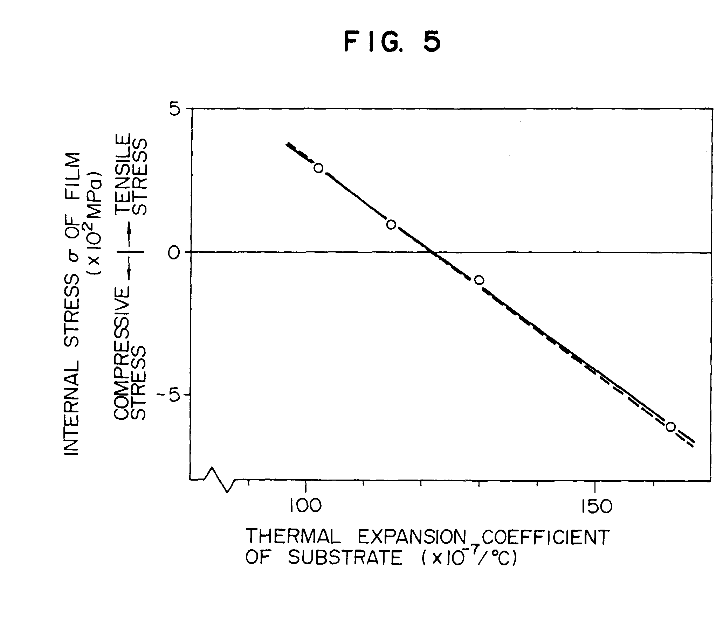

were prepared, and a 2 μm-thick soft magnetic film ($Fe_{76.5}Ta_{10.5}N_{13}$) (which was a composite material composed of a fine structure in which a fine crystal of $\alpha$-Fe and fine particles of tantalum nitride were mixed together) was formed on a surface of each substrate. The film was formed according to the same procedure as described in Example 1. A heat treatment was carried out for one hour at a temperature of 550°C in vacuum in a non-magnetic field. The amount of deflection of the heat-treated substrate having the film was measured, and the internal stress of the film, calculated by the use of the following formula (1), was plotted with respect to the thermal expansion coefficient of the substrate between a room temperature and 550°C, and this is indicated in a solid line in Fig. 5.

$$\sigma = \frac{E_s D^2 x \delta}{3l^2(I - v_s)d} \tag{1}$$

where $\underline{\sigma}$ denotes the internal stress of the film, $\underline{E_s}$ Young's modulus of the substrate, $v_s$ Poisson's ratio of the substrate, $\underline{D}$ the thickness of the substrate, $\underline{d}$ the thickness of the film, $\underline{l}$ the length of the film, and $\underline{\delta}$ the amount of deflection of the substrate with the film. Also, the relationship between the thermal stress of the film, calculated from the following formula (2), and the thermal expansion coefficient of the substrate between the room temperature and 550°C is indicated in a broken line in Fig. 5.

$$\sigma_{THE} = \frac{E_f(\alpha_f - \alpha_s)(T_1 - T_0)}{1 - v_f} \tag{2}$$

where $\underline{\sigma_{THE}}$ denotes the thermal stress of the film, $\underline{E_f}$ Young's modulus of the film, $\underline{v_f}$ Poisson's ratio of the film, $\underline{\alpha_f}$ the thermal expansion coefficient of the film, $\underline{\alpha_s}$ the thermal expansion coefficient of the substrate, $\underline{T_1}$ a raised temperature (there, 550°C) of the system consisting of the film and the substrate, and $\underline{T_0}$ the room temperature. As can be seen from Fig. 5, the solid line and the broken line well coincide with each other, and therefore it will be appreciated that the internal stress of the film is attributable to the thermal stress. When the thermal expansion coefficient of the substrate is in the range of 110 - 135 x $10^{-7}$/°C, the absolute value of the internal stress of the film is a small value of not more than 2 x $10^2$ MPa. It has been confirmed that the magnetic head member of the present invention using the non-magnetic or magnetic substrate having the thermal expansion coefficient of 110 - 135 x $10^{-7}$/°C has a high saturation flux density and a high permeability, and that the magnetic properties thereof are not deteriorated during the magnetic head production process, and that this magnetic head member can facilitate the bonding between the substrates, a glass molding, a gap formation etc.

Example 4

Targets of Fe-Ta-B and a target of Fe-Ta were used, and nitrogen gas was introduced into Ar gas, and by a reactive RF diode sputtering method, soft magnetic films (2 μm thick), having different boron (B) contents (The tantalum contents of these films as well as the nitrogen contents thereof were generally the same) were formed respectively on water-cooled non-magnetic ceramics substrates having a thermal expansion coefficient of 115 x $10^{-7}$/°C. The effect of the boron content of the films was studied. All of the thus prepared films were heat-treated for one hour at a temperature of 300 to 700°C in vacuum in a non-magnetic field. An analysis of the compositions of the prepared films indicated that their compositions were $Fe_{77}Ta_{11}N_{12}$, $Fe_{78.5}Ta_{11}B_{1.5}N_9$, $Fe_{76}Ta_{10}B_5N_9$, and $Fe_{68}Ta_{11}B_{11}N_{10}$ (atomic %), respectively.

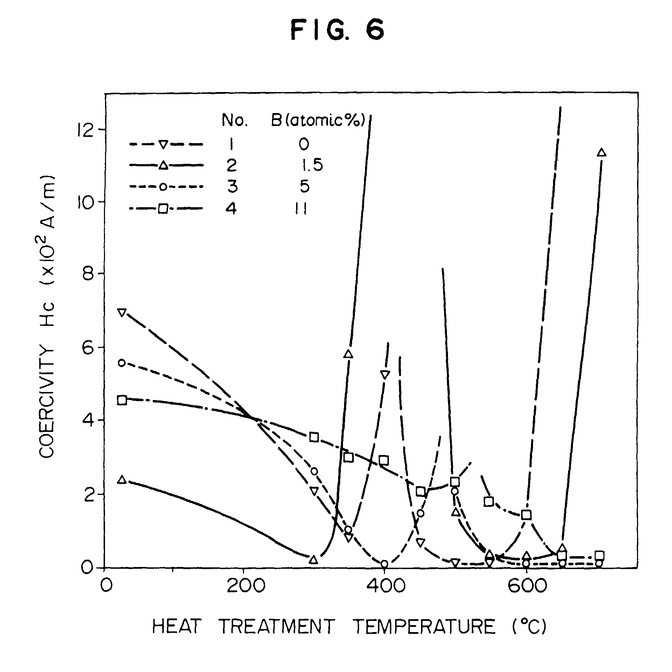

The dependency of the coercivity Hc of these soft magnetic films on the heat treatment temperature is shown in Fig. 6. As will be appreciated from Fig. 6, the Fe-Ta-N film whose boron content was zero atomic % is deteriorated in soft magnetic properties at the heat treatment temperature of not less than about 550°C; however, the Fe-Ta-B-N films containing boron exhibit isotropic low coercivity Hc (excellent isotropic soft magnetic properties) even at the higher heat treatment temperature. With the increase of the boron content of these films, the low coercivity Hc is maintained up to the higher heat treatment temperature. The film containing 5 atomic % boron exhibits excellent soft magnetic properties even at the heat treatment temperature of 700°C.

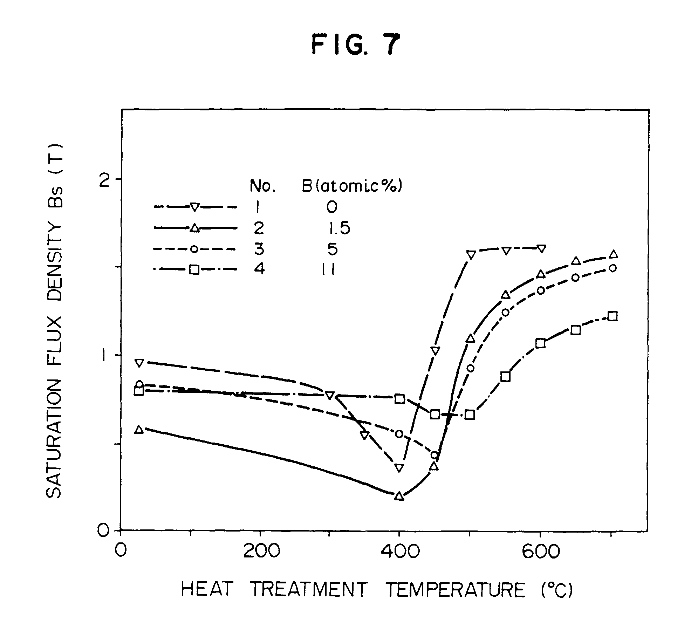

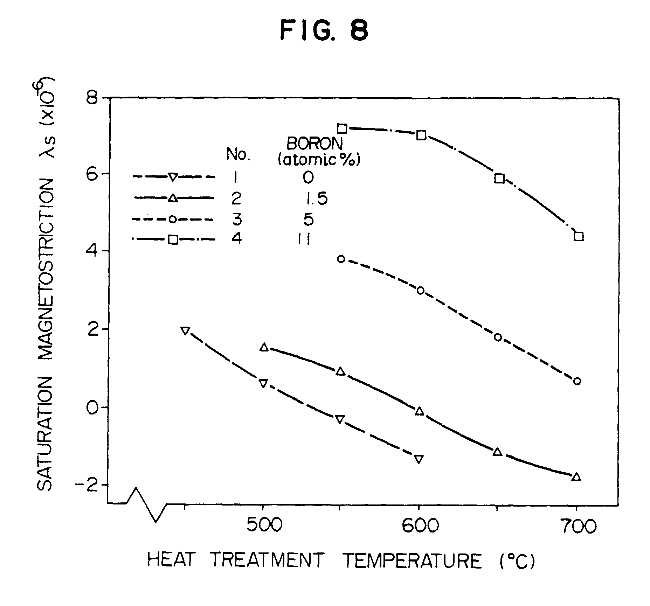

Fig. 7 shows the dependency of the saturation flux density Bs of these soft magnetic films on the heat treatment temperature. As will be appreciated from Fig. 7, any of these films exhibit a high saturation flux density Bs of 1.2 to 1.6 T at high heat treatment temperatures at which good soft magnetic properties are exhibited. Fig. 8 shows the dependency of the saturation magnetostriction $\lambda_s$ of these soft magnetic films on the heat treatment temperature. As will be appreciated from Fig. 8, with the increase of the heat treatment temperature, the Fe-Ta-N film and the Fe-Ta-B-N films decrease in saturation magnetostriction $\lambda_s$, and with the increase of the boron content of the films, the heat treatment temperature achieving the low magnetostriction shifts to the higher temperature side.

Therefore, with respect to the Fe-Ta-N film, the heat treatment temperature, at which good soft magnetic properties and the low magnetostriction are exhibited, is 500 to 550°C. On the other hand, with respect to the Fe-Ta-B-N films, good soft magnetic properties and the low magnetostriction (the saturation magnetostriction of not more than 1 x $10^{-6}$ in terms of an absolute value) can be exhibited at higher heat treatment temperatures by adjusting the boron content of the film. This enables the bonding of glass at high temperatures when producing a magnetic head, and widens the range of choice of glass materials to be used. Therefore, glass which is required to undergo a high-temperature heat treatment, provides a sufficient bonding strength and has excellent wear resistance, can be used, and this enhances the reliability of the magnetic head.

Next, soft magnetic films (2 μm thick), containing Fe as a main component, 0 to 15 atomic % B, 0 to 15 atomic % N and 5 to 16 atomic % Ta, were formed respectively on non-magnetic ceramics substrates, and these films were heat-treated for one hour at a temperature of 650°C in vacuum in a non-magnetic field. The coercivity Hc of these films was measured, and part of results thereof is shown in Table 2.

Table 2

| Film composition | Hc (A/m) | Film composition | Hc(A/m) |
|---|---|---|---|
| $Fe_{86.4}Ta_{12}B_{1.6}$ | 800 or more | $Fe_{75}Ta_{12.8}B_{12.2}$ | 800 or more |
| $Fe_{81.5}Ta_{11}B_{1.5}N_6$ | 38 | $Fe_{70.5}Ta_{12}B_{11.5}N_6$ | 70 |
| $Fe_{78.5}Ta_{11}B_{1.5}N_9$ | 45 | $Fe_{68.5}Ta_{11.5}B_{11}N_9$ | 30 |
| $Fe_{71.5}Ta_{10}B_{1.5}N_{17}$ | 791 | $Fe_{63.5}Ta_{10.5}B_{10}N_{16}$ | 800 or more |
| $Fe_{82.7}Ta_{11.5}B_{5.8}$ | 800 or more | $Fe_{85}Ta_8B_7$ | 800 or more |
| $Fe_{77.5}Ta_{11}B_{5.5}N_6$ | 18 | $Fe_{80}Ta_{7.5}B_{6.5}N_6$ | 18 |
| $Fe_{76}Ta_{10}B_5N_9$ | 9.5 | $Fe_{77.5}Ta_6B_{6.5}N_{10}$ | 222 |
| $Fe_{68}Ta_9B_5N_{18}$ | 800 or more | $Fe_{71.5}Ta_{6.5}B_6N_{16}$ | 800 or more |

As will be appreciated from Table 2, those films whose N content is either low or more than 15 atomic % exhibit a high coercivity Hc of several hundreds A/m, and therefore can not be used in a magnetic head (The value of the coercivity Hc suitably usable in the magnetic head is not more than 80 A/m). Those films whose Ta content is either not more than 7 atomic % or not less than 15 atomic % exhibit a high coercivity Hc of several hundreds A/m, and therefore can be used in a magnetic head.

With respect to those films composed of not less than 15 atomic % N, not less than 15 atomic % Ta, not less than 13 atomic % B and not more than 57 atomic % Fe, the saturation flux density was decreased to a level of not more than 1 T because of the reduced content of Fe.

The boron content of not less than 0.5 atomic % in the film enables the film to exhibit good soft magnetic properties at the high-temperature heat treatment. If the boron content of the film is not less than 13 atomic %, the heat treatment temperature at which good soft magnetic properties are exhibited becomes as high as not less than 800°C. This poses a problem with the heat resistance of the substrate on which the film is formed, and therefore narrows the range of choice of the substrate materials to be used. As described above, with respect to the Fe-Ta-B-N films, when these films contain Fe as a main component, 0.5 to 13 atomic % B, 6 to 15 atomic % N and 7 to 15 atomic % Ta, these films exhibit good soft magnetic properties at high heat treatment temperatures.

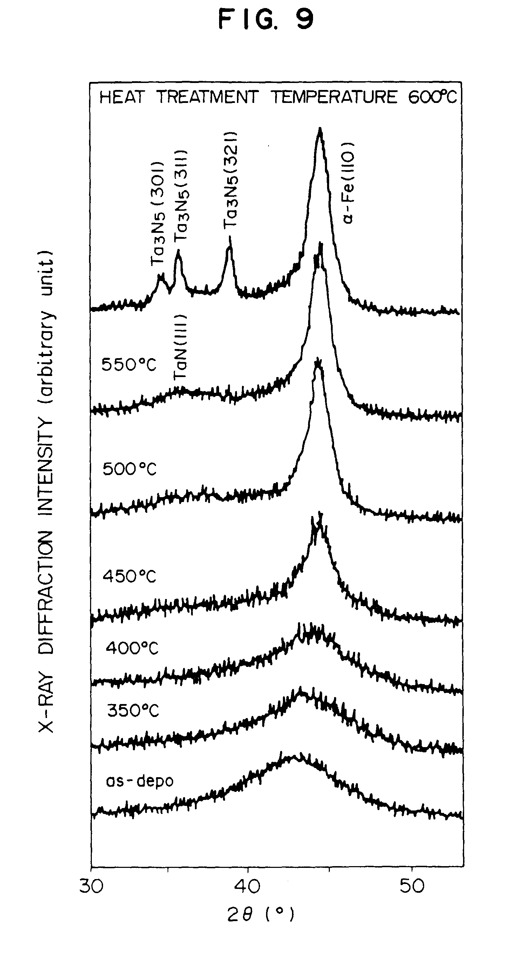

Fig. 9 shows an X-ray diffraction diagram of a Fe-Ta-N film composed of 77 atomic % Fe, 11 atomic % Ta and 12 atomic % N. As will be appreciated, the film, immediately after the formation thereof, is in an amorphous condition, and a fine crystal of $\alpha$-Fe begins to precipitate at 450°C, and at 500 to 550°C at which good soft magnetic properties are exhibited, the film becomes a composite material composed of a fine crystalline phase in which the fine crystal of $\alpha$-Fe and fine particles of the tantalum nitride (TaN) are mixed together. Then, at 600°C, a non-magnetic crystalline phase resulting from the grain growth of $Ta_3N_5$ appears, and the soft magnetic properties are deteriorated.

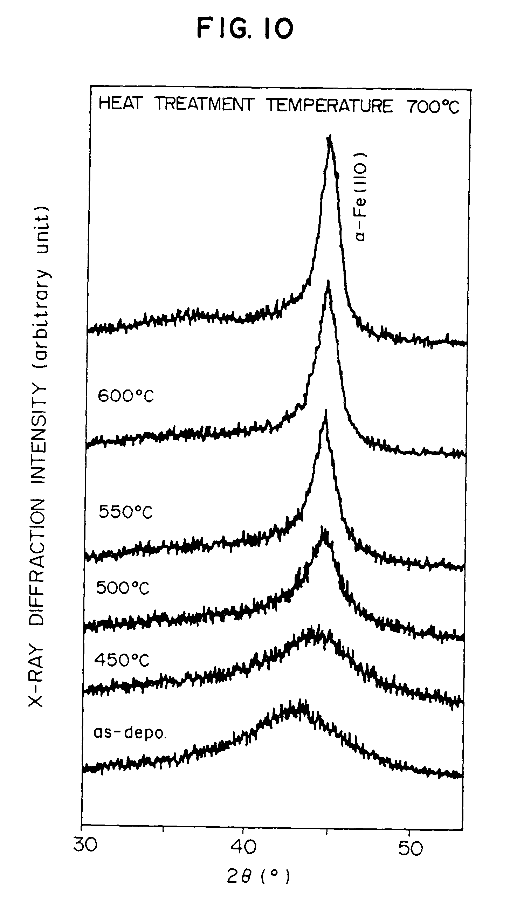

Fig. 10 shows an X-ray diffraction diagram of a Fe-Ta-B-N film composed of 76 atomic % Fe, 10 atomic % Ta, 5 atomic % B and 9 atomic % N. Like the Fe-Ta-N film, this film, immediately after the formation thereof, is in an amorphous condition, and fine crystal of $\alpha$-Fe begins to precipitate at 500°C. Unlike the Fe-Ta-N film, this film is still composed of a fine crystalline phase even at 700°C, and exhibits good soft magnetic properties.

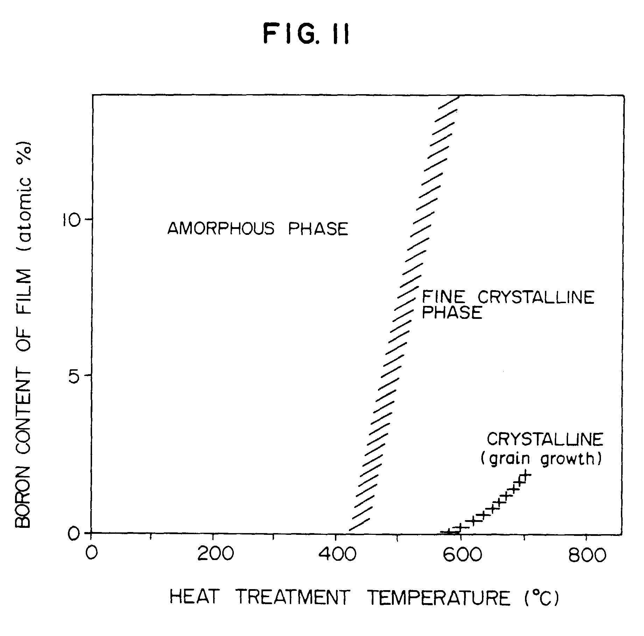

Fig. 11 shows a phase change in connection with the relationship between the boron content of films and a heat treatment temperature, wherein each of the Ta content and the nitrogen content was fixed (10 atomic %), and part of Fe was replaced by nitrogen. As will be appreciated from Fig. 11, with the increase of the nitrogen content, the heat treatment temperature at which the fine crystallization begin shifts to a high temperature side, and also with the increase of the nitrogen content, the fine crystalline phase region exhibiting good soft magnetic properties stably exists even at high heat treatment temperatures.

The structures of the films were subjected to an X-ray diffraction, and were observed by a transmitting electron microscope (TEM). As a result, it has been found that when the film is the composite material composed of the fine crystalline structure in which the fine crystal of $\alpha$-Fe is present in mixed relationship to the fine particles of tantalum nitride, the fine particles of tantalum boride, or BN, the film exhibits excellent soft magnetic properties.

It has also been found that when the $\alpha$-Fe is one in which at least one element or compound selected from the group consisting of N (nitrogen), B (boron), BN, the nitride of Ta and the boride of Ta is solutionized, and when the lattice of the fine crystal of $\alpha$-Fe is expanded by 0.2 to 0.6%, the film exhibits excellent soft magnetic properties. The observation by TEM indicates that when the average particle size of the fine crystal of $\alpha$-Fe is not more than 10 nm, and when the average particle size of the fine particles of tantalum nitride, or the fine particles of tantalum boride, or the fine particles of BN is not more than 5 nm, a further improved magnetic head output is obtained.

Core materials, prepared by adding 0.1 to 2 atomic % Cr or Ti to the above soft magnetic film of Fe-Ta-N or Fe-Ta-B-N, had an excellent corrosion resistance in addition to the above properties.

Example 5

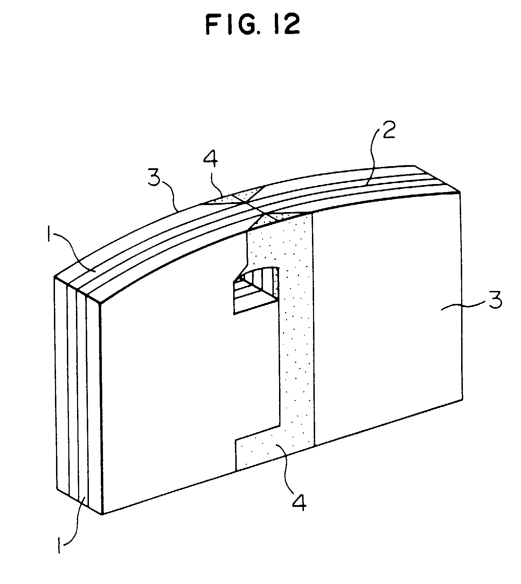

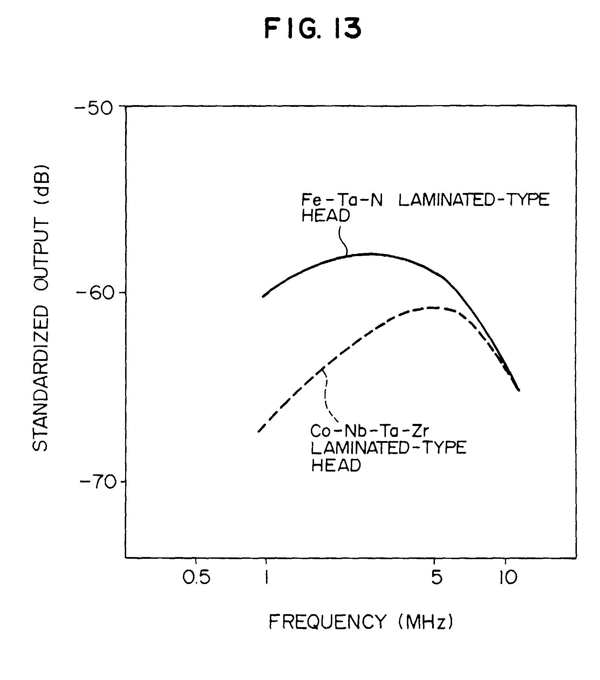

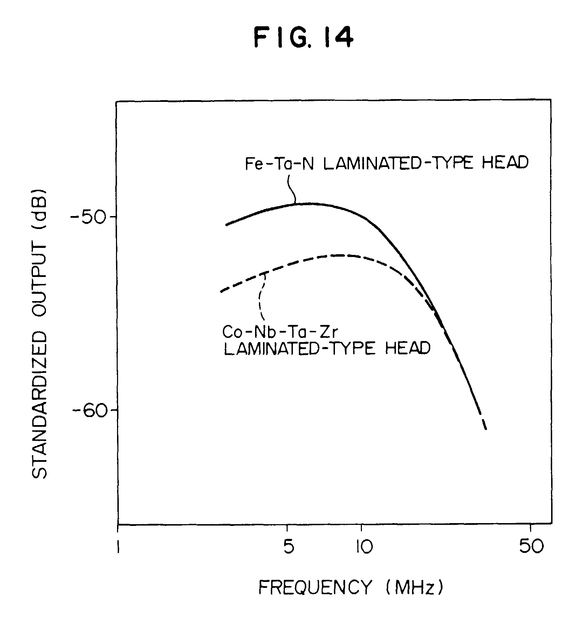

Using the RF diode sputtering method as described above, Fe-Ta-N films were formed respectively on water-cooled non-magnetic ceramics (Ti-Mg-Ni-O (oxygen)) substrates having a thermal expansion coefficient of 115 x $10^{-7}$/°C. The thickness of these films was in the range of 0.2 to 15 µm. The films were heat-treated for one hour at a temperature of 550°C in vacuum in a non-magnetic field. The Fe-Ta-N soft magnetic films (3 µm thick), composed of 76.5 atomic % Fe, 10.5 atomic % Ta and 13 atomic % N as described in the above Example, and insulator films of $SiO_2$ (0.2 µm thick) were alternately laminated on a water-cooled non-magnetic ceramics substrate (having a thermal expansion coefficient of 115 x $10^{-7}$/°C) to form a core material, and by a magnetic head heat treatment process in a non-magnetic field, a laminated-type head shown in Fig. 12 was prepared. In Fig. 12, numerals 1 denote soft magnetic films of an Fe-Ta-N system alloy or an Fe-Ta-B-N system alloy, 2 an insulator film, 3 non-magnetic substrates or magnetic substrates (for example, ferrite material) and 4 a non-magnetic material (for example, glass). The magnetic head thus prepared had a track width of 11 µm, a gap length of 0.23 µm, a gap depth of 22 µm, and the number of turn of a coil was 20. With respect to the measurement of the output of the head, an endless head tester and a drum tester were used, and an MP tape having a coercivity of 119400 A/m was used, and self-recording/reproducing characteristics at relative speeds of 7 m/sec and 21 m/sec were measured. Figs. 13 and 14 show frequency characteristics of the head output standardized by the track width and the number of the coil turn when recorded at the optimum recording current at various frequencies. The relative speed in Fig. 13 is 7 m/sec, and the relative speed in Fig. 14 is 21 m/sec.

For comparison purposes, each of Figs. 13 and 14 also shows frequency characteristics of a standardized head output of a laminated-type head which was prepared to have the same shape and used Co-Nb-Ta-Zr amorphous films as soft magnetic films. As will be appreciated from Figs. 13 and 14, the laminated-type head, using the core material formed by alternately laminating the Fe-Ta-N system soft magnetic films and the insulation films of $SiO_2$, exhibited higher output characteristics at long wavelengths than the comparative laminated-type head using the core material formed by alternately laminating the Co-Nb-Ta-Zr amorphous films and insulator films of $SiO_2$, and also exhibited, at short wavelengths, good characteristics generally equal to those of the comparative laminated-type head. In this Example, although the self-recording/reproducing characteristics, obtained with respect to the commercially-available MP tape having a coercivity of 119400 A/m, have been described, the magnetic head of the present invention can exhibit more excellent self-recording/reproducing characteristics with respect to media having a higher coercivity, thereby achieving a high-density recording.

In this Example, although explanation has been made of the laminate-type magnetic head in which the magnetic circuit is constituted by the core material formed by alternately laminating the 3 μm-thick Fe-Ta-N system soft magnetic films and the 0.2 μm-thick $SiO_2$ insulator films, similar effects were achieved when the thickness of the Fe-Ta-N system soft magnetic films of the core material was 1 to 10 μm, and the thickness of the insulator film was 0.05 to 0.5 μm.

In this Example, although explanation has been made of the Fe-Ta-N soft magnetic film composed of 76.5 atomic % Fe, 10.5 atomic % Ta and 13 atomic % N, similar effects were achieved with respect to Fe-Ta-N system soft magnetic films containing Fe as a main component, 5 to 17 atomic % N and 7 to 15 atomic % Ta.

Also, similar effects were achieved with respect to Fe-Ta-B-N system soft magnetic films containing Fe as a main component, 6 to 15 atomic % N, 7 to 15 atomic % Ta and 0.5 to 13 atomic % B, and these films achieved good soft magnetic properties (high saturation flux density and small magnetostriction) at higher heat treatment temperatures as compared with the Fe-Ta-N system soft magnetic films. Therefore, when producing the magnetic head, glass bonding can be done at higher temperature, and the range of choice of glass is widened. Therefore, the glass which is required to a high-temperature heat treatment and can provide a sufficient strength and an excellent wear resistance can be used, which enhances the reliability of the magnetic head.

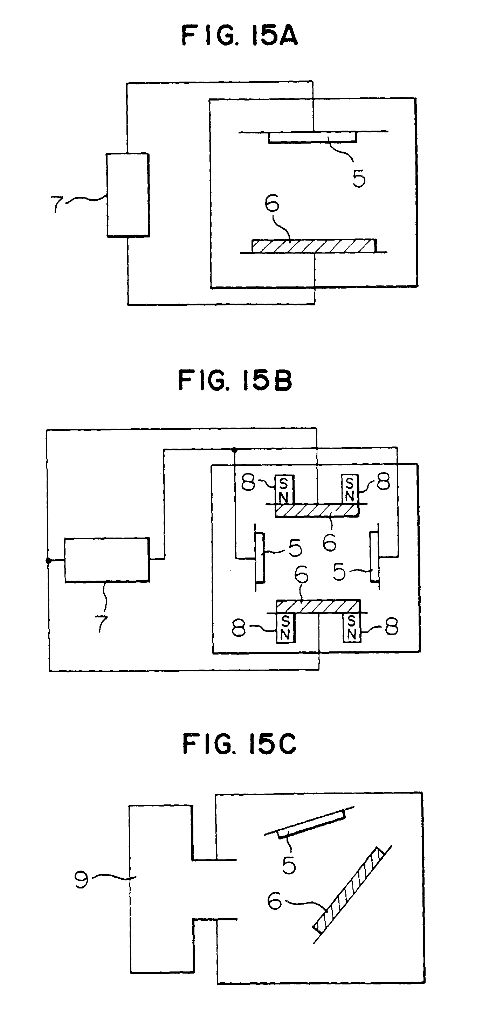

In this Example, although the core material was produced using the RF diode sputtering method, the method of producing the core material of the present invention is not limited to the RF diode sputtering method, and similar effects were achieved by a diode or a triode magnetron method (using direct current or radio frequency) and a bias sputtering method, in so far as a substrate 5 and a target 6 are disposed in parallel opposed relationship as shown in Fig. 15A. However, by targets facing sputtering method (Fig. 15B), in which targets are not disposed parallel to substrates, and an ion beam sputtering method (Fig. 15C), atoms, ejected from the target to be incident obliquely on the substrate, deposited on the substrate, and therefore the anisotropy developed in the permeability of the produced film. As a result, magnetic heads of the above laminated-type, produced using a core material made of the films formed by the these method, did not achieve good output characteristics.

## Claims

1.  A magnetic head having at least one magnetic gap in the magnetic path thereof which consists of a substrate (3), a core material (1, 2) and the magnetic gap, the core material comprising laminated magnetic alloy films which are formed on the substrate, wherein:

    the core material constituting a magnetic circuit comprises Fe-Ta-N system soft magnetic films (1) and insulator films (2) both kinds of which are alternately laminated, the soft magnetic films being formed on the substrate (3) by a sputtering method of the type in which a target and the substrate are arranged in parallel opposite relationship to each other;
    the soft magnetic films consist of Fe-Ta-N system alloy material which contains Fe as a main component, 5 to 17 atomic % nitrogen, and 7 to 15 atomic % Ta;
    the alloy material has a specific fine structure in which a fine crystal of α-Fe and fine particles of tantalum nitride are mixed together, the fine crystal of α-Fe being one in which at least one element or a compound selected from the group consisting of Ta, nitrogen, and tantalum nitride is solutionized and thereby the crystal lattice α-Fe being expanded, the average grain size of the fine crystal of α-Fe being not more than 10 nm, and the average particle size of the fine particles of tantalum nitride being not more than 5 nm;
    the respective soft magnetic film has a thickness of 1 to 10μm;
    the substrate has a thermal coefficient of linear expansion of from $110 \times 10^{-7}/°C$ to $135 \times 10^{-7}/°C$ at a temperature range from room temperature to 550 °C; and
    a heat treatmen during a magnetic head production process is carried out without a magnetic field.

2. A magnetic head having at least one magnetic gap in the magnetic path thereof which consists of a substrate (3), a core material (1, 2) and the magnetic gap, the core material comprising laminated magnetic alloy films which are formed on the substrate, wherein:

the core material constituting a magnetic circuit comprises Fe-Ta-B-N system soft magnetic films (1) and insulator films (2) both kinds of which are alternately laminated, the soft magnetic films being formed on the substrate (3) by a sputtering method of the type in which a target and the substrate are arranged in parallel opposite relationship to each other;

the soft magnetic films consist of Fe-Ta-B-N system alloy material which contains Fe as a main component, 6 to 15 atomic % nitrogen, 7 to 15 atomic % Ta and 0.5 to 13 atomic % boron;

the alloy material has a specific fine structure in which a fine crystal of $\alpha$-Fe and fine particles of tantalum nitride or tantalum boride are mixed together, the fine crystal of $\alpha$-Fe being one in which at least one element or a compound selected from the group consisting of Ta, nitrogen, boron, tantalum nitride and tantalum boride is solutionized and thereby the crystal lattice $\alpha$-Fe being expanded, the average grain size of the fine crystal of $\alpha$-Fe being not more than 10 nm, and the average particle size of the fine particles of tantalum nitride being not more than 5 nm;

the respective soft magnetic film has a thickness of 1 to 10 $\mu$m;

the substrate has a thermal coefficient of linear expansion of from 110 X $10^{-7}$/°C to 135 X $10^{-7}$/°C at a temperature range from room temperature to 550 °C; and

a heat treatment during a magnetic head production process is carried out without a magnetic field.

3. A magnetic head according to claim 1 or 2, characterized in that the substrate consists of first and second substrate layers and the core material is interposed there between.

4. A magnetic head according to any preceding claim, characterized in that the substrate is a magnetic material.

5. A magnetic head according to any of claims 1 to 3, characterized in that the substrate is a non-magnetic material.

**Patentansprüche**

1. Magnetkopf mit mindestens einem Magnetspalt in seinem magnetischen Weg, welcher aus einem Träger (3 ), einem Kernmaterial (1, 2) und dem Magnetspalt besteht, wobei das Kernmaterial geschichtete Magnetlegierungsfilme aufweist, welche auf dem Träger erzeugt sind, wobei:

das einen magnetischen Kreis bildende Kernmaterial weichmagnetische Filme (1) des Fe-Ta-N-Systems und Isolierungsfilme (2) aufweist, wobei diese beiden Arten abwechselnd geschichtet sind, und die weichmagnetischen Filme auf dem Träger (3 ) durch ein Sputterverfahren des Typs erzeugt sind, bei dem ein Target und der Träger in parallel gegenüberliegender Beziehung zueinander angeordnet sind;

die weichmagnetischen Filme aus einem Legierungsmaterial des Fe-Ta-N-Systems bestehen, welches Fe als Hauptkomponente, 5 bis 17 Atom-% Stickstoff, und 7 bis 15 Atom-% Ta enthält;

das Legierungsmaterial eine spezifische feine Struktur besitzt, bei welcher ein feiner Kristall aus $\alpha$-Eisen und feine Partikel aus Tantalnitrid miteinander vermischt sind, wobei der feine Kristall aus $\alpha$-Eisen einer ist, bei dem mindestens ein Element oder eine Verbindung, die aus der aus Ta, Stickstoff, und Tantalnidrid gebildeten Gruppe gewählt ist, gelöst ist und dadurch das Kristallgitter des $\alpha$-Eisen expandiert ist, die durchschnittliche Korngröße des feinen Kristalls aus $\alpha$-Eisen nicht mehr als 10 nm beträgt, und die durchschnittliche Partikelgröße der feinen Partikel aus Tantalnitrid nicht mehr als 5 nm beträgt;

der jeweilige weichmagnetische Film eine Dicke von 1 bis 10 $\mu$m besitzt;

der Träger einen linearen Wärmeausdehnungskoeffizienten von 110 x 10 $^{-7}$/°C bis 135 x 10 $^{-7}$/°C in einem Temperaturbereich von Raumtemperatur bis 550°C besitzt; und

eine Wärmebehandlung während des Magnetkopfherstellungsverahrens ohne ein magnetisches Feld erfolgt.

2. Magnetkopf mit mindestens einem Magnetspalt in seinem magnetischen Weg, welcher aus einem Träger (3), einem Kernmaterial (1, 2) und dem Magnetspalt besteht, wobei das Kernmaterial geschichtete Magnetlegierungsfilme aufweist, welche auf dem Träger erzeugt sind, wobei:

das einen magnetischen Kreis bildende Kernmaterial weichmagnetische Filme (1) des Fe-Ta-B-N-Systems und Isolierungsfilme (2) aufweist, wobei diese beiden Arten abwechselnd geschichtet sind, und die weichmagnetischen Filme auf dem Träger (3) durch ein Sputterverfahren des Typs erzeugt sind, bei dem ein Target und der Träger in parallel gegenüberliegender Beziehung zueinander angeordnet sind;

die weichmagnetischen Filme aus einem Legierungsmaterial des Fe-Ta-B-N-Systems bestehen, welches Fe als Hauptkomponente, 6 bis 15 Atom-% Stickstoff, 7 bis 15 Atom-% Ta, und 0,5 bis 13 Atom-% Bor enthält;

das Legierungsmaterial eine spezifische feine Struktur besitzt, bei welcher ein feiner Kristall aus $\alpha$-Eisen und feine Partikel aus Tantalnitrid oder Tantalborid miteinander vermischt sind, wobei der feine Kristall aus $\alpha$-Eisen einer ist, bei dem mindestens ein Element oder eine Verbindung, die aus der aus Ta, Stickstoff, Bor, Tantalnidrid und Tantalborid gebildeten Gruppe gewählt ist, gelöst ist und dadurch das Kristallgitter des $\alpha$-Eisen expandiert ist, die durchschnittliche Korngröße des feinen Kristalls aus $\alpha$-Eisen nicht mehr als 10 nm beträgt, und die durchschnittliche Partikelgröße der feinen Partikel aus Tantalnitrid nicht mehr als 5 nm beträgt;

der jeweilige weichmagnetische Film eine Dicke von 1 bis 10 μm besitzt;

der Träger einen linearen Wärmeausdehnungskoeffizienten von 110 x $10^{-7}$/°C bis 135 x $10^{-7}$/°C in einem Temperaturbereich von Raumtemperatur bis 550°C besitzt; und

eine Wärmebehandlung während des Magnetkopfherstellungsverfahrens ohne ein magnetisches Feld erfolgt.

**3.** Magnetkopf nach den Ansprüchen 1 oder 2, dadurch gekennzeichnet, daß der Träger aus ersten und zweiten Trägerschichten besteht und das Kernmaterial dazwischen angeordnet ist.

**4.** Magnetkopf nach einem der vorstehenden Ansprüche, dadurch gekennzeichnet, daß der Träger ein magnetisches Material ist.

**5.** Magnetkopf nach einem der Ansprüche 1 bis 3, dadurch gekennzeichnet, daß der Träger ein nicht-magnetisches Material ist.

## Revendications

**1.** Tête magnétique comportant au moins un entrefer dans son circuit magnétique, qui est constitué par un substrat (3), par un matériau pour noyau magnétique (1,2) et par ledit entrefer, le matériau du noyau magnétique comprenant des films stratifiés d'alliage magnétique, qui sont formés sur le substrat, dans laquelle:

le matériau du noyau magnétique, qui constitue un circuit magnétique, comprend des films magnétiques doux (1), composés d'un système Fe-Ta-N, et des films isolants (2), les deux sortes de films étant stratifiés en alternance, les films magnétiques doux étant formés sur le substrat (3) par un procédé de pulvérisation du type dans lequel une cible et le substrat sont disposés face à face parallèlement l'un à l'autre ;

les films magnétiques doux sont constitués par un matériau allié composé d'un système Fe-Ta-N, qui contient du Fe à titre de composant principal, 5 à 17 % en atomes d'azote et 7 à 15 % en atomes de Ta ;

le matériau allié a une structure spécifique fine, dans laquelle un cristal fin de Fe $\alpha$ et des fines particules de nitrure de tantale sont mélangés ensemble, le cristal fin de Fe $\alpha$ étant un cristal dans lequel au moins un élément ou un composé choisi dans le groupe comprenant le Ta, l'azote et le nitrure de tantale est mis en solution et, par suite, le réseau cristallin de Fe $\alpha$ est dilaté, la taille moyenne des grains du cristal fin de Fe $\alpha$ n'étant pas supérieure à 10 nm, et la taille moyenne des fines particules de nitrure de tantale n'étant pas supérieure à 5 nm;

chaque film magnétique doux a une épaisseur comprise entre 1 et 10 μm ;

le substrat a un coefficient d'allongement thermique compris entre 110.$10^{-7}$/°C et 135.$10^{-7}$/°C dans une gamme de températures allant de la température ambiante à 550°C ; et

un traitement thermique est effectué sans champ magnétique pendant le processus de production de la tête magnétique.

**2.** Tête magnétique comportant au moins un entrefer dans son circuit magnétique, qui est constitué par un substrat (3), par un matériau pour noyau magnétique (1,2) et par ledit entrefer, le matériau du noyau magnétique comprenant des films stratifiés d'alliage magnétique, qui sont formés sur le substrat, dans laquelle:

le matériau du noyau magnétique, qui constitue un circuit magnétique, comprend des films magnétiques doux (1), composés d'un système Fe-Ta-B-N, et des films isolants (2), les deux sortes de films étant stratifiés en alternance, les films magnétiques doux étant formés sur le substrat (3) par un procédé de pulvérisation du type dans lequel une cible et le substrat sont disposés face à face parallèlement l'un à l'autre ;

les films magnétiques doux sont constitués par un matériau allié composé d'un système Fe-Ta-B-N, qui contient du Fe à titre de composant principal, 6 à 15 % en atomes d'azote, 7 à 15 % en atome de Ta et 0,5 à 13 % en atomes de bore ;

le matériau allié a une structure spécifique fine, dans laquelle un cristal fin de Fe $\alpha$ et des fines particules de nitrure de tantale ou de borure de tantale sont mélangés ensemble, le cristal fin de Fe $\alpha$ étant un cristal dans lequel au moins un élément ou un composé choisi dans le groupe comprenant le Ta, l'azote, le bore, le nitrure de tantale et le borure de tantale est mis en solution et, par suite, le réseau cristallin de Fe $\alpha$ est dilaté, la taille moyenne des grains du cristal fin de Fe $\alpha$ n'étant pas supérieure à 10 nm, et la taille moyenne des fines particules de nitrure de tantale n'étant pas supérieure à 5 nm;

chaque film magnétique doux a une épaisseur comprise entre 1 et 10 μm ;

le substrat a un coefficient d'allongement thermique compris entre $110.10^{-7}/°C$ et $135.10^{-7}/°C$ dans une gamme de températures allant de la température ambiante à 550°C ; et

un traitement thermique effectué sans champ magnétique pendant le processus de production de la tête magnétique.

3. Tête magnétique selon la revendication 1 ou 2, caractérisée en ce que le substrat est composé d'une première et d'une seconde couche de substrat, et le matériau du noyau magnétique est interposé entre elles.

4. Tête magnétique selon l'une quelconque des revendications précédentes, caractérisée en ce que le substrat est en un matériau magnétique.

5. Tête magnétique selon l'une quelconque des revendications 1 à 3, caractérisée en ce que le substrat est en un matériau amagnétique.

# FIG. 1

# F I G. 2

# F I G. 3

# FIG. 4

# F I G. 5

# FIG. 6

# FIG. 7

# FIG. 8

# FIG. 9

# FIG. 10

# FIG. II

# FIG. 12

# FIG. 13

# FIG. 14

## FIG. 15A

## FIG. 15B

## FIG. 15C